# EUROPEAN PATENT APPLICATION

(11) **EP 3 885 547 A1**
(43) Date of publication of application: **29.09.2021**
(21) Application number: 19888114.6
(22) Date of filing: 24.10.2019
(51) Int. Cl.: F02B 19/08, F02B 19/14, F02B 23/02, F02M 61/18

(54) **PRE-CHAMBER TYPE DIESEL ENGINE**

(30) Priority: 20.11.2018 JP 2018217399
(71) Applicant: Yanmar Power Technology Co., Ltd., Osaka-shi Osaka 530-0013 (JP)
(72) Inventor: ASAI Go, Osaka-shi, Osaka 530-0013 (JP); MORITA Gin, Osaka-shi, Osaka 530-0013 (JP); MATSUKI Kazuya, Osaka-shi, Osaka 530-0013 (JP)
(74) Representative: Vigand, Philippe
(86) International application number: PCT/JP2019/041622
(87) International publication number: WO 2020/105354

(57) **Abstract**

Provided is a pre-chamber type diesel engine in which fuel injected from an injector mixes satisfactorily with air in a pre-combustion chamber. A corner space section (32), in which a forced vortex is formed by a flow of air advancing into a pre-combustion chamber (20) from a main combustion chamber (14) via a connecting hole (22) during the compression stroke of a piston (12), is provided at a prescribed position between the line of extension of the connecting hole (22) and the wall surface of the pre-combustion chamber (20).

## Description

### TECHNICAL FIELD

The present invention relates to a pre-chamber type diesel engine having a main combustion chamber and a pre-combustion chamber that communicates by connecting holes.

### BACKGROUND ART

For example, as shown in Patent Literature 1, a pre-chamber type diesel engine including a main combustion chamber and a pre-combustion chamber that communicates by a connecting hole and an injector that injects fuel into the pre-combustion chamber has become widespread. In the above-mentioned pre-chamber type diesel engine, in a compression stroke of a piston, air flows into the pre-combustion chamber from the main combustion chamber through the connecting hole, whereby an air vortex flow is formed in the pre-combustion chamber, and when the piston reaches the vicinity of a compression top dead center, fuel is injected from the injector toward the vortex flow. The injected fuel is mixed with air in the pre-combustion chamber by the vortex flow, is compressed and self-ignited, and involved gas expansion pushes down the piston so as to obtain work.

At this time, from a viewpoint of emission, in order to reduce smoke and HC contained in combustion gas generated after the ignition, the fuel injected from the injector is preferably mixed uniformly with the air in the pre-combustion chamber.

### CITATION LIST

### Patent Literature

Patent Literature 1: Japanese Patent No. 3851727

### DISCLOSURE OF INVENTION

### PROBLEMS TO BE SOLVED BY THE INVENTION

In the pre-chamber type diesel engine disclosed in Patent Literature 1, since the pre-combustion chamber has a spherical shape as a whole, the air flow that has entered the pre-combustion chamber from the main combustion chamber through the connecting hole in the compression stroke of the piston forms only a free vortex (vortex flow) along an inner wall surface of the pre-combustion chamber. Therefore, the flow of air in the pre-combustion chamber is constant, and the fuel injected from the injector is only made to flow along the free vortex and is not sufficiently mixed with air in the pre-combustion chamber.

The present invention was made in view of the above facts, and its main technical problem is to provide a new and improved pre-chamber type diesel engine in which the fuel injected from the injector is favorably mixed with air in the pre-combustion chamber.

### MEANS FOR SOLVING THE PROBLEMS

As a result of diligent studies, the present inventors have found that the above-mentioned main technical problem is solved by providing a unique space section at a predetermined position between an extension line of a connecting hole and a wall surface of the pre-combustion chamber where a forced vortex is formed by an air flow that has entered the pre-combustion chamber through the connecting hole from the main combustion chamber in a compression stroke of a piston.

That is, according to the present invention, as a pre-chamber type diesel engine that solves the above-mentioned main technical problem, in a pre-chamber type diesel engine including a main combustion chamber and a pre-combustion chamber that communicates by a connecting hole and an injector that injects the fuel into the pre-combustion chamber,
a pre-chamber type diesel engine characterized in that the connecting hole extends with inclination with respect to a reciprocating motion direction of the piston, and between an extension line of the connecting hole and a wall surface of the pre-combustion chamber, a corner space section is provided in which a forced vortex is formed by an air flow that has entered the pre-combustion chamber through the connecting hole from the main combustion chamber in a compression stroke of the piston is provided.

Preferably, the pre-combustion chamber includes a hemispherical main portion and an inverted truncated cone-shaped portion connected to an annular open end edge of the main portion, and an opening on the pre-combustion chamber side of the connecting hole is provided so as to be offset inward from an inner side surface of the inverted truncated cone shaped portion. Preferably, the injector injects fuel into the corner space section. At this time, an injection center axis of the fuel injected from the injector is preferably inclined by 20 to 45 degrees with respect to the compression motion direction of the piston in a vertical cross-sectional view passing through the communication hole. The injection holes of the injector may include a plurality of small injection holes formed at intervals. The injection hole of the injector may have a slit shape. An injection pressure of the fuel from the injector is preferably 8 to 40 MPa.

The injector includes an engine operation state detector that detects an engine operation state and a controller, the injector can inject fuel at arbitrary timing by an electrical signal from the controller, and the controller can execute control such that the injector performs a plurality of preliminary injections while a crank angle detected by the engine operation state detector is between 180 degrees and 60 degrees before the compression top dead center of the piston. At that time, the controller executes control such that an injection amount of the preliminary injection is 25 to 50% of the total injection amount, which is the sum of the injection amount of the preliminary injection and the injection amount of the main injection, and preferably controls the number of the preliminary injections per cycle such that the fuel injected from the injector does not reach the wall surface of the pre-combustion chamber. Further, the controller preferably executes control such that, when an engine rotation speed is equal to or less than a predetermined value, or when the total injection amount which is the sum of the injection amount of the preliminary injection and the injection amount of the main injection is equal to or more than a predetermined value, or when a cooling water temperature is equal to or less than a predetermined value, the injector does not perform the preliminary injection even if the crank angle detected by the engine operation state detector is between 180 degrees and 60 degrees before the compression top dead center of the piston.

### EFFECT OF THE INVENTION

In the pre-chamber type diesel engine of the present invention, the connecting hole extends with inclination with respect to the reciprocating motion direction of the piston, and a corner space section is provided between the extension line of the connecting hole and the wall surface of the pre-combustion chamber. Therefore, a free vortex, which is an air flow that has entered the pre-combustion chamber from the main combustion chamber through the connecting hole, is formed in the pre-combustion chamber, and a forced vortex is formed secondarily by this free vortex at least in the corner space section, and since the fuel injected from the injector is made to flow by the free vortex along the fuel and agitated by the forced vortex, the fuel is well mixed with air in the pre-combustion chamber.

### BRIEF DESCRIPTION OF DRAWINGS

FIG. 1 is a schematic view of a preferred embodiment of a diesel engine configured in accordance with the present invention.
FIG. 2 is a diagram for explaining an air flow in the pre-combustion chamber and fuel injected from an injector in the diesel engine shown in FIG. 1.
FIG. 3 is a diagram showing injection holes of the injector included in the diesel engine shown in FIG. 1.

### DESCRIPTION OF EMBODIMENTS

Hereinafter, a preferred embodiment of a pre-chamber type diesel engine configured in accordance with the present invention will be described in more detail with reference to the accompanying drawings.

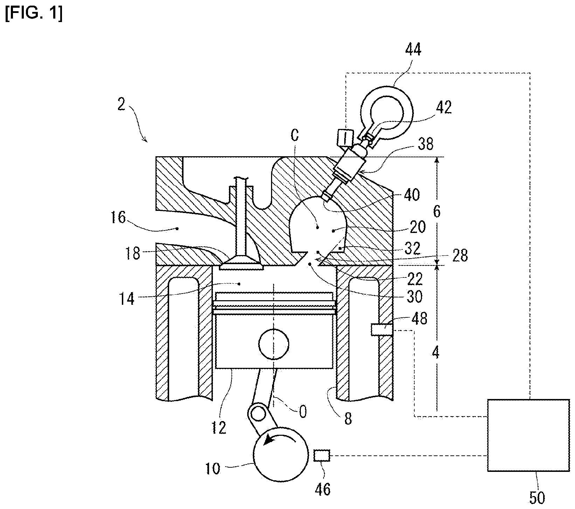

FIG. 1 shows a schematic view showing a part of configuration of a pre-chamber type diesel engine 2 including a main combustion chamber and a pre-combustion chamber that communicates by a connecting hole in a cross section. The diesel engine 2 includes a cylinder block 4 and a cylinder head 6.

A cylinder 8 having a cylindrical shape with an open end face is formed inside the cylinder block 4, and a piston 12 reciprocated by a crank 10 is arranged in the cylinder 8. In the illustrated embodiment, the cylinder head 6 is placed above the cylinder block 4, and the piston 12 is reciprocated in a vertical direction. A main combustion chamber 14 is defined inside the cylinder block 4 by an inner peripheral surface of the cylinder 8, a top surface of the piston 12, and the cylinder head 6.

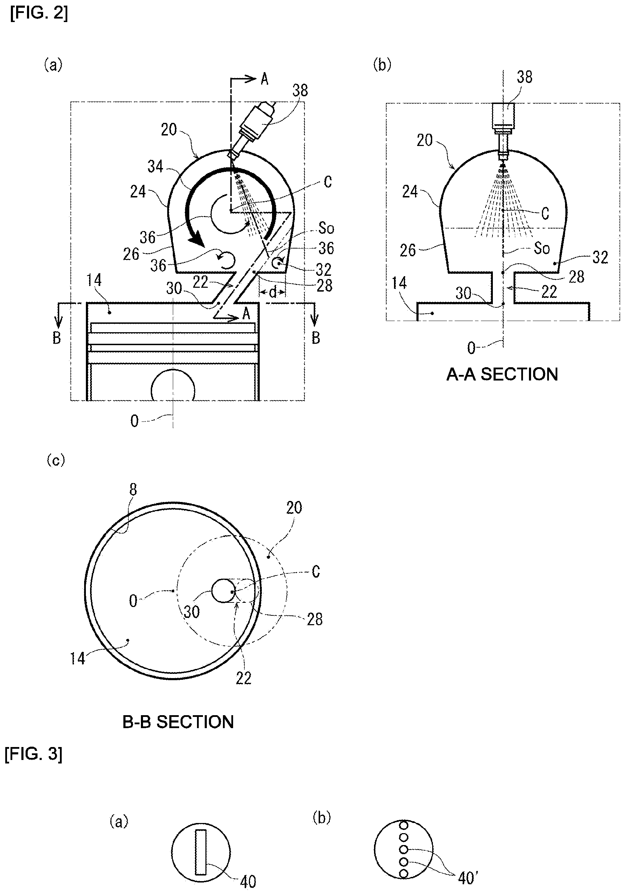

In the cylinder head 6, when combined with the cylinder block 4, an intake port 16 that sends new air to the main combustion chamber 14 and an exhaust port (not shown) that discharges combustion gas generated in the combustion chamber are formed. Valves 18 that are opened and closed at predetermined timing are provided at an outlet of the intake port 16 (that is, the inlet to the main combustion chamber 14) and an inlet of the exhaust port (that is, the outlet from the main combustion chamber 14), respectively. The cylinder head 6 further includes a pre-combustion chamber 20 and a connecting hole 22 communicating with that. Explaining with reference to FIGS. 2(a) to 2(c) together with FIG. 1, in the illustrated embodiment, the pre-combustion chamber 20 includes a hemispherical main portion 24 and an inverted truncated cone-shaped portion 26 connected to an annular open end edge located at a lower end of this main portion 24, and when the cylinder head 6 is combined with the cylinder block 4, a center c of the main portion 24 is arranged eccentrically with respect to a center axis o of the main combustion chamber 14. A side surface of the inverted truncated cone-shaped portion 26 is preferably inclined inward in a radial direction by 10 to 20 degrees downward along the center axis o of the main combustion chamber 14. The connecting hole 22 extends linearly upward with inclination outward in the radial direction. The connecting hole 22 is preferably inclined upward and outward in the radial direction by 55 to 70 degrees along the center axis o of the main combustion chamber 14. An opening (also referred to as a main combustion chamber side opening) 30 in the connecting hole 22, that is not an opening (also referred to as the pre-combustion chamber side opening) 28 formed in the pre-combustion chamber 20, is formed on an end face of the cylinder head 6, and when the cylinder head 6 is combined with the cylinder block 4, the main combustion chamber side opening 30 is faced with an outer peripheral edge of the upper surface of the main combustion chamber 14, and the pre-combustion chamber 20 and the main combustion chamber 14 are that communicates through the connecting hole 22. On the other hand, the pre-combustion chamber side opening 28 is formed in an intermediate portion in the radial direction of the lower end surface of the inverted truncated cone-shaped portion 30 as shown in FIG. 2(a). Therefore, the pre-combustion chamber side opening 28 is provided so as to be offset inward in the radial direction by a distance d from the inner side surface of the inverted truncated cone-shaped portion 26, and a corner space section 32 is provided between the extension line of the connecting hole 22 and the wall surface of the pre-combustion chamber 20. In the corner space section 32, a forced vortex 36 (indicated by a thin arrow) is formed by the air flow that entered the pre-combustion chamber 20 from the main combustion chamber 14 through the connecting hole 22 in the compression stroke of the piston 12 (this is called a free vortex and is indicated by a bold arrow numbered 34). A plurality of forced vortices 36 are formed in the pre-combustion chamber 20 in addition to the corner space section 32.

In the pre-chamber type diesel engine 2 of the present invention, the connecting hole 22 extends with inclination with respect to the reciprocating motion direction of the piston 12, and the corner space section 32 is provided between the extension line of the connecting hole 22 and the wall surface of the pre-combustion chamber 20. Therefore, the free vortex 34, which is an air flow that has entered the pre-combustion chamber 20 from the main combustion chamber 14 through the connecting hole 22, is formed in the pre-combustion chamber 20, and the forced vortex 36 is formed secondarily by this free vortex 34 at least in the corner space section 32, and since the fuel injected from an injector 38 is made to flow by the free vortex 34 along the fuel and agitated by the forced vortex 36 as will be described later, the fuel is well mixed with the air in the pre-combustion chamber 20.

Continuing the description with reference to FIG. 1, in the cylinder head 6, the injector 38 that injects fuel into the pre-combustion chamber 20 is further provided. The injector 38 is a so-called internally open valve type injector, which has an overall axial shape, and a fuel flow path (not shown) extending in the axial direction is formed therein. An injection hole 40 for injecting fuel from the fuel flow path is provided on one end surface in the axial direction of the injector 38 (lower end surface in the illustrated embodiment), and a mouth portion 42 for supplying fuel to the fuel flow path is formed on the other end portion in the axial direction (upper end portion in the illustrated embodiment). A needle valve, not shown, is built in the injector 38, and an operation of this needle valve is controlled by an electromagnetic solenoid, not shown, and the injection hole 40 is opened and closed at desired injection timing on the basis of an electrical signal sent from an engine ECU which will be described later. In the illustrated embodiment, the injection hole 40 of the injector 38 is constituted by a slit as shown in FIG. 3(a). If desired, the injection hole may be formed from a plurality of small injection holes formed at intervals, as indicated by reference numeral 40' in FIG. 3(b). Further, an injection pressure of the fuel from the injector 38 may be a relatively low pressure of 8 to 40 MPa. Since the diesel engine according to the present invention employs the pre-chamber type, it is not necessary to inject fuel at a high pressure (for example, 200 MPa) as in a direct injection type. Therefore, it is not necessary to make the structures of the injector, a fuel pump, not shown, a fuel passage pipe which will be described later, a fuel pipe, not shown, and the like excessively robust, and a manufacturing cost of the injection device can be kept low.

The injector 38 is inserted into the cylinder head 6, the injection hole 40 is exposed in the pre-combustion chamber 20, and the other end portion in the axial direction of the injector 38 including at least the mouth portion 42 is exposed to the outside of the cylinder head 6. Then, a fuel passage pipe 44 fixed to the cylinder head 6 is connected to the mouth portion 42 by fixing means, not shown. Here, in FIG. 1 and the like, only one cylinder 8 is shown in the cylinder block 4, but in actuality, a plurality of cylinders 8 are formed in the cylinder block 4, and there are combustion chambers (main combustion chamber 14 and pre-combustion chamber 20) in the same number as the number of the cylinders 8. That is, the injectors 38 in the same number as the number of cylinders 8 are also installed, and the fuel pressurized by the fuel pump, not shown, is distributed to the respective injectors 38 via the common fuel passage pipe 44.

Next, the injection of fuel from the injector 38 will be described with reference to FIG. 2.

In the illustrated embodiment, the injector 38 injects fuel toward the corner space section 32 in the pre-combustion chamber 20. At this time, the injection center axis so of the fuel injected from the injector 38 is preferably inclined by 20 to 45 degrees with respect to a compression motion direction of the piston in a vertical cross section passing through the communication hole (that is, in FIG. 2(a), the injection center axis so of the fuel is preferably inclined by 20 to 45 degrees with respect to the center axis o of the main combustion chamber 14). As shown in FIG. 2(a), the fuel injected from the injector 38 intersects the free vortex 34 having a relatively large flow velocity, whereby the fuel is made to flow in a downstream direction of the free vortex 34 and is agitated by the forced vortex 36. At this time, a part of the fuel injected from the injector 38 penetrates the free vortex 34 and reaches the corner space section 32, and it is agitated by the forced vortex also in the corner space section 32. Therefore, the fuel injected from the injector 38 is sufficiently well mixed with the air in the pre-combustion chamber 20.

It is considered that the same effect as the above effect can be obtained even if the injector 38 injects fuel toward the pre-combustion chamber side opening 28 instead of the corner space section 32 in the pre-combustion chamber 20. However, when the injector 38 injects fuel toward the pre-combustion chamber side opening 28, particularly when the injector 38 performs the preliminary injection which will be described later, the preliminary injection is performed in the first half of the compression stroke of the piston and thus, an internal pressure of the cylinder 10 is not sufficient, and the fuel injected from the injector 38 may pass through the connecting hole 22 and directly reach the main combustion chamber 14 without being burned. If the fuel injected from the injector 38 reaches the main combustion chamber 14 without being burned, there is a concern that the unburned fuel may adhere to the wall surface of the cylinder 8 and cause a so-called oil dilution problem. In order to avoid this, when the injector 38 injects fuel radially outward in FIG. 2(a) from the pre-combustion chamber side opening 28, if the pre-combustion chamber side opening 28 is not offset from the inner side surface of the pre-combustion chamber 20 (in other words, if the inner side surface of the pre-combustion chamber 20 is not set back from the pre-combustion chamber side opening 28), there is a concern that the fuel injected from the injector 38 reaches the inner side surface of the pre-combustion chamber 20 and adheres to it, which deteriorates combustion. Further, when the injector 38 injects fuel outward in the radial direction in FIG. 2(a) from the pre-combustion chamber side opening 28, the fuel injected from the injector 38 is directed toward an upstream of the free vortex 34 and thus, it collides with it, is diffused, and is easily mixed well with air in the pre-combustion chamber 20. On the other hand, when the injector 38 injects fuel inward in the radial direction in FIG. 2(a) from the pre-combustion chamber side opening 28, the fuel injected from the injector 38 is injected toward the downstream of the free vortex 34 and thus, the fuel is only made to flow along the free vortex and is not necessarily mixed well with air in the pre-combustion chamber 20.

In the illustrated embodiment, the engine operation state detector that detects the engine operation state and the controller are provided. The engine operation state detector includes various sensors, not shown, including at least a crank angle sensor 46 and an engine water temperature sensor 48. The controller is constituted by an engine ECU 50 such as a computer, which includes a central processing unit (CPU) that performs arithmetic processing in accordance with a control program, a read only memory (ROM) that stores the control program and the like, a readable/writable random access memory (RAM) that temporarily stores detected detection values, arithmetic results and the like, an input interface, and an output interface (details are not shown).

Since the diesel engine 2 of the present embodiment includes the engine operation state detector and the controller, the injector 38 can inject fuel at arbitrary timing by an electrical signal from the engine ECU 50 (controller). At this time, the engine ECU 50 (controller) executes control such that the injector 38 performs a plurality of preliminary injections while the crank angle detected by the crank angle sensor 46 (engine operation state detector) is between 180 degrees and 60 degrees before the compression top dead center of the piston 12. At that time, further, the number of the preliminary injections per cycle is preferably controlled by the engine ECU 50 (controller) so that an injection amount of the preliminary injection is 25 to 50% of the total injection amount, which is the sum of the injection amount of the preliminary injection and the injection amount of the main injection, and the fuel injected from the injector 38 does not reach the wall surface of the pre-combustion chamber 20 as the preliminary injection. This is because, when the injector 38 injects a large amount of fuel in the preliminary injection, the internal pressure of the cylinder 8 is not sufficient and thus, the entire injected fuel is not ignited, and a part thereof adheres to the inner wall surface of the pre-combustion chamber 20, which deteriorates combustion efficiency.

Further, the engine ECU 50 (controller) executes control such that the injector 38 does not perform the preliminary injection when an engine rotation speed detected by the crank angle sensor 46 is equal to or less than a predetermined value, when the total injection amount, which is the sum of the injection amount of the preliminary injection and the injection amount of the main injection is equal to or more than a predetermined value, or when a cooling water temperature detected by the engine water temperature sensor 48 is equal to or less than a predetermined value, even if the crank angle is between 180 degrees and 60 degrees before the compression top dead center of the piston 12. This is because, if the injector 38 performs preliminary injection under such conditions, the combustion efficiency deteriorates.

Although the diesel engine of the present invention has been described in detail with reference to the accompanying drawings, the present invention is not limited to such an embodiment, and various variations or modifications can be made without departing from the scope of the present invention. For example, in the present embodiment, the cylinder head is placed on the upper surface of the cylinder block, and the piston reciprocates in the vertical direction, but instead, the cylinder head may be placed on the side surface of the cylinder block, and the piston may reciprocate in the lateral (horizontal) direction.

### DESCRIPTION OF REFERENCE NUMERALS

- 2: Diesel engine

- 12: Piston
- 14: Main combustion chamber
- 20: Pre-combustion chamber
- 22: Connecting hole
- 24: Main portion
- 26: Inverted truncated cone shaped portion
- 28: Pre-combustion chamber side opening
- 30: Main combustion chamber side opening
- 32: Corner space section
- 34: Free vortex
- 36: Forced vortex
- 38: Injector
- 40: Injection hole

## Claims

1. A pre-chamber type diesel engine, comprising a main combustion chamber and a pre-combustion chamber that communicates by a connecting hole and an injector that injects fuel into the pre-combustion chamber, wherein
the connecting hole extends with inclination with respect to a reciprocating motion direction of a piston, and
between an extension line of the connecting hole and a wall surface of the pre-combustion chamber, a corner space section is provided in which a forced vortex is formed by an air flow that has entered the pre-combustion chamber through the connecting hole from the main combustion chamber in a compression stroke of the piston.

2. The pre-chamber type diesel engine according to claim 1, wherein
the pre-combustion chamber comprises a hemispherical main portion and an inverted truncated cone-shaped portion connected to an annular open end edge of the main portion, and
an opening on a pre-combustion chamber side of the connecting hole is provided so as to be offset inward from an inner side surface of the inverted truncated cone-shaped portion.

3. The pre-chamber type diesel engine according to claim 1 or 2, wherein the injector injects fuel toward the corner space section.

4. The pre-chamber type diesel engine according to claim 3, wherein an injection center axis of the fuel injected from the injector is inclined by 20 to 45 degrees with respect to a compression motion direction of the piston in a vertical cross-sectional view passing through a communication hole.

5. The pre-chamber type diesel engine according to any one of claims 1 to 4, wherein an injection hole of the injector comprises a plurality of small injection holes formed at intervals.

6. The pre-chamber type diesel engine according to any one of claims 1 to 4, wherein the injection hole of the injector has a slit shape.

7. The pre-chamber type diesel engine according to any one of claims 1 to 6, wherein an injection pressure of the fuel from the injector is 8 to 40 MPa.

8. The pre-chamber type diesel engine according to any one of claims 1 to 7, further comprising
an engine operation state detector that detects an engine operation state and
a controller, wherein
the injector can inject fuel at arbitrary timing by an electrical signal from the controller, and
the controller executes control such that the injector performs a plurality of preliminary injections while a crank angle detected by the engine operation state detector is between 180 degrees and 60 degrees before a compression top dead center of the piston.

9. The pre-chamber type diesel engine according to claim 8, wherein
the controller executes control such that an injection amount of the preliminary injection is 25 to 50% of a total injection amount, which is the sum of an injection amount of the preliminary injection and an injection amount of main injection and controls a number of preliminary injections per cycle so that the fuel injected from the injector as the preliminary injection does not reach a wall surface of the pre-combustion chamber.

10. The pre-chamber type diesel engine according to claim 8 or 9, wherein the controller executes control such that, when an engine rotation speed is equal to or less than a predetermined value, when the total injection amount, which is the sum of the injection amount of the preliminary injection and the injection amount of the main injection, is equal to or more than a predetermined value, or when a cooling water temperature is equal to or less than a predetermined value, the injector does not perform the preliminary injection even if the crank angle detected by the engine operation state detector is between 180 degrees and 60 degrees before the compression top dead center of the piston.
